(19) Europäisches Patentamt
European Patent Office
Office européen des brevets

(11) **EP 2 760 150 A1**

(12) **EUROPEAN PATENT APPLICATION**

(43) Date of publication:
**30.07.2014  Bulletin 2014/31**

(51) Int Cl.:
**H04L 1/00** *(2006.01)*          **H04L 1/06** *(2006.01)*

(21) Application number: **13305103.7**

(22) Date of filing: **29.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventor: **Dhayni, Achraf**
**06220 Vallauris (FR)**

(74) Representative: **Hirsch & Associés**
**58, avenue Marceau**
**75008 Paris (FR)**

(54) **Method of communication encoding with space time block codes**

(57)    This invention deals with a method of communication comprising, at transmitting side, encoding, with one or more space time block codes chosen among a predetermined group of space time block codes (M1, M2, M3, M4), one or more series of several consecutive symbols in a header of a packet of data of a same data format (11 to 44), said space time block code or said succession of space time block codes being chosen so as to be representative of said data format (11 to 44).

Fig.2

```
┌──────────────────────────────────────┐
│      ANALYZING PACKET HEADER         │─── S4
└──────────────────────────────────────┘
                  │
                  ▼
┌──────────────────────────────────────┐
│          INDENTIFYING STBC           │─── S5
└──────────────────────────────────────┘
                  │
                  ▼
┌──────────────────────────────────────┐
│       ASSOCIATING DATA FORMAT        │─── S6
└──────────────────────────────────────┘
                  │
                  ▼
┌──────────────────────────────────────┐
│   ADAPTING DATA RECEIVING PARAMETER  │─── S7
└──────────────────────────────────────┘
                  │
                  ▼
┌──────────────────────────────────────┐
│            RECEIVING DATA            │─── S8
└──────────────────────────────────────┘
```

EP 2 760 150 A1

**Description**

TECHNICAL FIELD

The invention relates to methods of communication encoding with space time block codes, and more particularly to methods of communication encoding, with a space time block code, at least part of packets to be sent from a transmitter towards a receiver.

BACKGROUND

Some definitions of frame format are hereby given. NON-HT means non high throughput. HT means high throughput. VHT means very high throughput. HT-MF means high throughput mixed format. HT-GF means high throughput Greenfield format.

Other definitions are hereby given. BPSK means binary phase shift keying. QBPSK means quadrature binary phase shift keying. OFDM means orthogonal frequency division multiplexing. L-STF, L-LTF, L-SIG, HT-SIG, HT-STF, HT-LTF, VHTSIG, VHTSTF, VHTLTF, are all segments of a packet header which are defined in the standards 802.11, whereas DATA is a data segment of packet which is defined in the standards 802.11 too.

According to a prior art, Space Time Block Code, and more particularly Alamouti's code, is used to encode data packets before their transmission. Such a prior art can be found for example in an article [Tarokh, V., Jafarkhani, H., and Calderbank, A.R. (1999) "Space-time block coding for wireless communications: performance results" IEEE Journal on selected areas in communications, vol. 17(3), pp. 451-460, March 1999] or for example in another article [S.M. Alamouti, "A simple transmitter diversity scheme for wireless communications", IEEE Journal on selected areas in communications, vol. 16, pp. 1451-1458, October 1998].

In such a prior art using Space Time Block Code, in order to detect the data format, that is to say in order to detect the mode or frame format as well as the bandwidth of the communication channel(s) used between a transmitter and a receiver, the used technique includes the following steps at the receiving side, after frame format has been encoded directly in the consecutive symbols of packet header themselves by using BPSK and QBPSK.

First, a detection of either BPSK or QBPSK corresponding respectively to either NON-HT or HT-GF is performed on first OFDM symbol following L-LTF segment in packet header. Then, a combination of the decoded LSIG segment information with the detection of either BPSK or QBPSK corresponding respectively to either NON-HT (and VHT) or HT-MF performed on second OFDM symbol following L-LTF segment in packet header is made. Then, a combination of the decoded LSIG segment information with the detection of either BPSK or QBPSK corresponding respectively to either NON-HT or VHT performed on third OFDM symbol following L-LTF segment in packet header is made. Afterwards, a combination of the detection of BPSK or QBPSK with correlation of LSIG segment on two/four sub-channels corresponding to either NON-HT or NON-HT duplicated format with the identification of the used bandwidth is made.

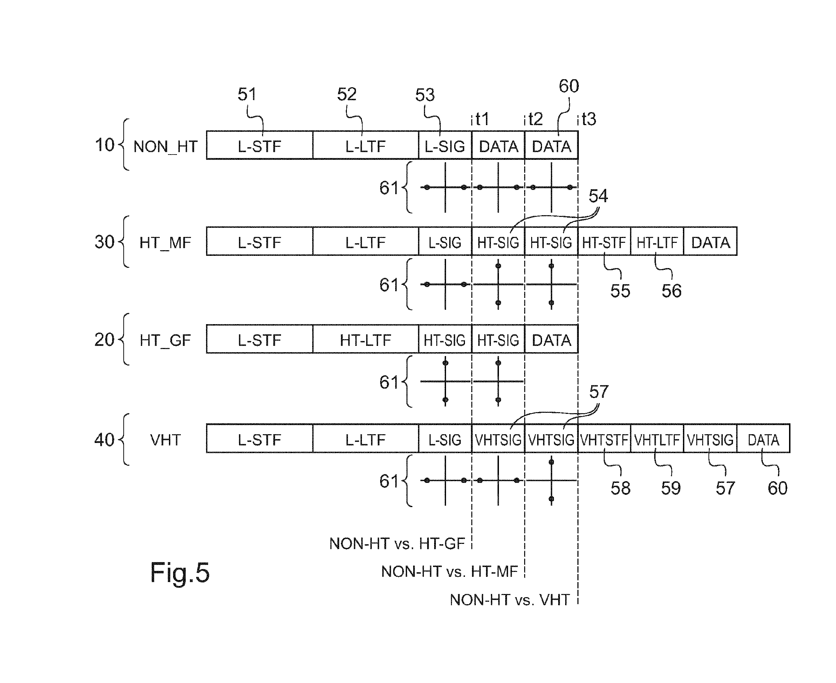

This prior art technique is rather complex. The encoding of the data format according to the prior art is partly described with more detail with respect to figure 5.

SUMMARY

An object of embodiments of the present invention is to alleviate at least partly the above mentioned drawbacks.

More particularly, embodiments of the invention aim to provide an encoding technique of data format information in a packet header which allows for direct and real time decoding and which allows for encoding more data format information in this packet header, preferably without changing the packet header structure often predetermined, and which can be relatively simply decoded.

To be able to encode, at transmitting side, richer data format information still allowing, at receiving side, for a direct and real time decoding, performed in a rather simple way, embodiments of the invention preferably propose rather to encode the consecutive symbols with different Space Time Block Codes, the type and the succession of these Space Time Block Codes being representative of the data format information, than to encode the consecutive symbols with a single and same Space Time Block Code, the consecutive symbols themselves being changed through BPSK and QBPSK to vehicle the data format information.

That way, to decode the data format information, it is only necessary to identify which Space Time Block Code or which succession of Space Time Block Codes has been used to encode the consecutive symbols in packet header, rather than to be able either to make more complicated analysis about the consecutive symbols themselves to be able to extract all the relevant information about data format or to make a relatively simple analysis but then extracting only part of the relevant information about data format.

Preferably, embodiments of the invention propose a simple and efficient way to detect not only the frame format, but also the channel bandwidth which, in prior art, could only be detected at the costs of rather complicated processing.

Preferably, embodiments of the invention propose to use a same type of orthogonal Space Time Block Code, while changing only the sense of the orthogonality of this type of orthogonal Space Time Block Code.

Preferably, this proposed simple implementation with negligible silicon overhead is not only foreseen for coming embodiments of IEEE 802.11 standard for WLAN (Wireless Local Area Network) protocol, where the number of channel bandwidth and packet frame format possibilities will get larger, but is also backward compatible with the past embodiments of this IEEE 802.11 standard.

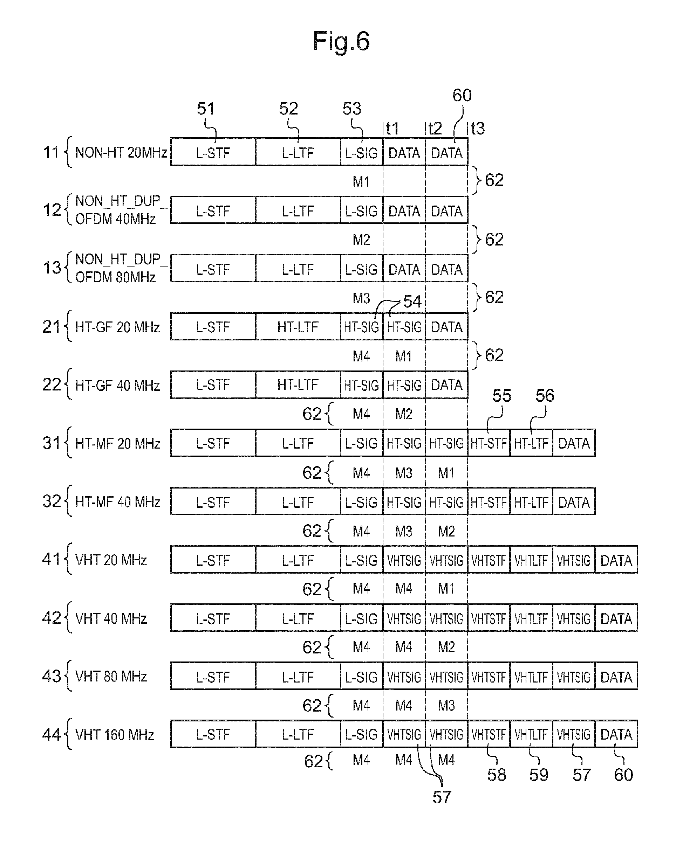

The encoding of the data format according to the prior art is partly described with more detail with respect to figure 5, whereas the encoding of the data format according to an embodiment of the invention is described with more detail with respect to figure 6. By comparing figures 5 and 6, advantages of the described embodiment of the invention over the prior art in terms of quantities of information relating to data format that can be coded are also visibly illustrated.

This object and other objects may be achieved with a method of communication comprising, at transmitting side, encoding, with one or more space time block codes chosen among a predetermined group of space time block codes, one or more series of several consecutive symbols in a header of a packet of data of a same data format, said space time block code or said succession of space time block codes being chosen so as to be representative of said data format.

This object and other objects may also be achieved with a method of communication comprising, at receiving side:

- identifying a space time block code or a succession of space time block codes by analyzing one or more series of several consecutive symbols in a header of a packet of data of a same data format, previously encoded with one or more space time block codes chosen among a predetermined group of space time block codes in such a way that said space time block code or said succession of space time block codes is representative of said data format,
- associating said data format to said identified space time block code or said identified succession of space time block codes,
- adapting at least one of the data receiving parameters to said associated data format.

Said orthogonal space time block code or said succession of orthogonal space time block codes being chosen so as to be representative of said data format means that two packets of data presenting different data formats from each other being coded with different orthogonal space time block codes or different successions of orthogonal space time block codes.

The header of the data packet is located in packet segments which are ahead of the packet segments where the data are located.

This object and other objects may also be achieved with a transmitter comprising:

- at least two transmitting antennas,
- one encoder adapted to encode, with one or more space time block codes chosen among a predetermined group of space time block codes, one or more series of several consecutive symbols in a header of a packet of data of a same data format, said space time block code or said succession of space time block codes being chosen so as to be representative of said data format.

This object and other objects may also be achieved with a receiver comprising:

- at least a receiving antenna,
- a decoder adapted to:

  ○ identify a space time block code or a succession of space time block codes by analyzing one or more series of several consecutive symbols in a header of a packet of data of a same data format, previously encoded with one or more space time block codes chosen among a predetermined group of space time block codes, in such a way that said space time block code or said succession of space time block codes is representative of said data format,
  ○ associate said data format to said identified space time block code or said identified succession of space time block codes,
  ○ adapt at least one of its data receiving parameters to said associated data format.

Preferred embodiments comprise one or more of the following features:

- all space time block codes belonging to said predetermined group of space time block codes are orthogonal or quasi-orthogonal space time block codes, and preferably are orthogonal space time block codes.

- the only difference between all orthogonal space time block codes of said predetermined group is the sense of their orthogonality.
- said consecutive symbols themselves vehicle an information different from said data format.
- said data format contains two pieces of information, one piece of information related to the data frame format and one piece of information related to the channel bandwidth.
- communication between transmitting side and receiving side is performed via a multichannel connection, one or part of or all of the different channels of the multichannel connection being usable.
- said data packet presents a predetermined segmented structure.
- all said space time block codes are each represented by a 2 by 2 matrix, all said space time block codes are preferably Alamouti codes, and said predetermined group preferably comprises 4 different space time block codes.
- said communication is wireless, and is preferably according to WIFI protocol.
- said communication is performed according to standard IEEE 802.11, preferably IEEE 802.11 ac, and said encoded consecutive symbols are located in SIG type segments of said header.
- it comprises, at transmitting side, encoding, with one or more space time block codes chosen among a predetermined group of space time block codes, one or more series of several other consecutive symbols in said header of said packet, said space time block code or said succession of space time block codes being chosen so as to be representative of a time synchronization parameter of said packet, all space time block codes being preferably orthogonal space time block codes.
- a computer program product comprising a computer readable medium, having thereon a computer program comprising program instructions, the computer program being loadable into a data-processing unit and adapted to cause execution of the method according to embodiments of the invention when the computer program is run by the data-processing unit.

Further features and advantages of the invention will appear from the following description of embodiments of the invention, given as non-limiting examples, with reference to the accompanying drawings listed hereunder.

BRIEF DESCRIPTION OF THE DRAWINGS

Fig. 1 shows an example of steps of a method of communication, at transmitting side, according to an embodiment of the invention.
Fig. 2 shows an example of steps of a method of communication, at receiving side, according to an embodiment of the invention.
Fig. 3 shows an example of a part of a transmitter according to an embodiment of the invention.
Fig. 4 shows an example of a part of a receiver according to an embodiment of the invention.
Fig. 5 shows an example of encoding of some examples of data format within a method of communication, at transmitting side, according to the prior art.
Fig. 6 shows an example of encoding of some examples of data format within a method of communication, at transmitting side, according to an embodiment of the invention.

DETAILED DESCRIPTION OF THE INVENTION

A Space Time Block Code is a code known in the art. However some interesting properties showing the benefit of using such a Space Time Block Code will be reviewed hereafter.

When using a Space Time Block Code, the data stream to be transmitted is encoded in blocks which are distributed among spaced antennas and across time. Multiple transmitting antennas are used for the transmission. A single antenna can be used for the reception, although using multiple receiving antennas for the reception improves performance.

A Space Time Block Code is usually represented by a matrix. Each row represents a time slot and each column represents one antenna's transmissions over time.

Here is an example of such a matrix:

$$\text{time-slots} \left| \begin{array}{c} \\ \\ \\ \\ \\ \\ \downarrow \end{array} \right. \overset{\text{transmit antennas}}{\left[ \begin{array}{cccc} s_{11} & s_{12} & \cdots & s_{1n_T} \\ s_{21} & s_{22} & \cdots & s_{2n_T} \\ \vdots & \vdots & & \vdots \\ s_{T1} & s_{T2} & \cdots & s_{Tn_T} \end{array} \right]}$$

In the matrix, $s_{ij}$ is the modulated symbol to be transmitted in time slot i from antenna j. There are to be T time slots and $n_T$ transmit antennas as well as $n_R$ receive antennas. The code rate of a Space Time Block Code measures how many symbols per time slot it transmits on average over the course of one block. If a block encodes k symbols, the code rate is r = k/T. Only one standard Space Time Block Code can achieve full rate, which is rate 1, it is Alamouti's code.

Space Time Block Codes are preferably orthogonal. This means that the Space Time Block Code is designed such that the vectors representing any pair of columns taken from the coding matrix are orthogonal. The result of this is simple, linear, optimal decoding at the receiver. Its most serious disadvantage is that all but one (Alamouti's code) of the codes that satisfy this criterion will sacrifice some proportion of their data rate. Besides, there exist quasi orthogonal Space Time Block Codes that achieve higher data rates at the cost of inter symbol interference.

Alamouti's code is a special Space Time Block Code. It is the only orthogonal Space Time Block Code that achieves rate 1, that is to say full rate as code rate. That is to say that it is the only Space Time Block Code that can achieve its full diversity gain without needing to sacrifice its data rate.

One particularly interesting feature of orthogonal Space Time Block Codes is that maximum likelihood decoding can be achieved at the receiver with only linear processing.

Now, the use of the sense of orthogonality of a Space Time Block Code which is a preferred and interesting feature of this described embodiment will be developed in more detail. It will be developed with the simpler (lower rank) of Space Time Block Codes which is the Alamouti code. The working of this Alamouti code will be explained too. The Alamouti code is a complex orthogonal Space Time Block Code specialized for the case of two transmit antennas.

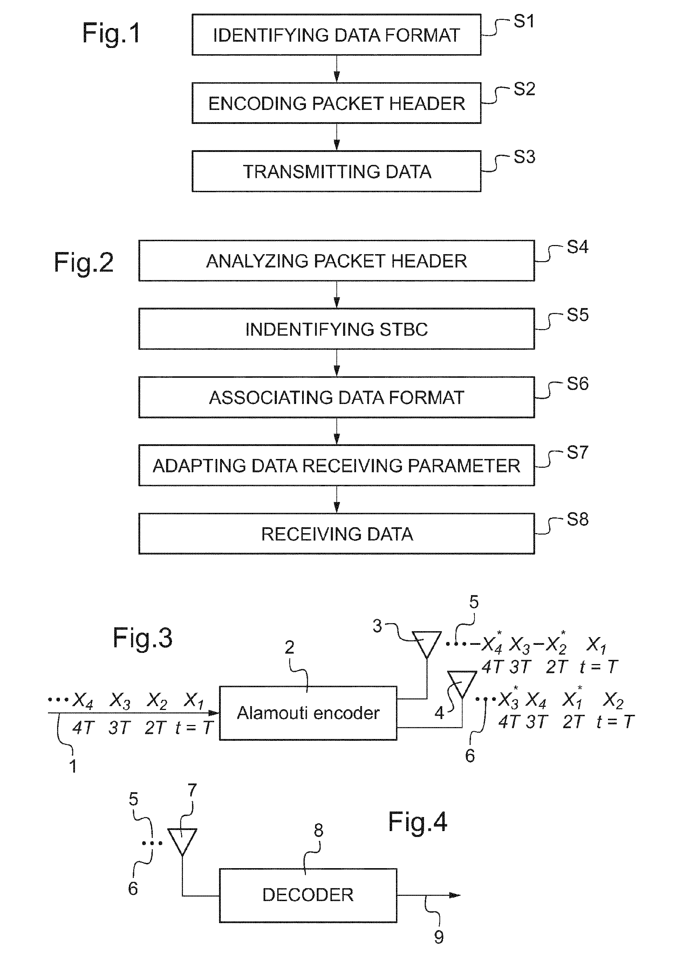

In the Alamouti encoder, which will be described in more detail with respect to figure 3 hereafter, two consecutive symbols x1 and x2 are encoded with the following space-time code word matrix:

$$\mathbf{X} = \begin{bmatrix} x_1 & -x_2^* \\ x_2 & x_1^* \end{bmatrix}$$

where * denotes the complex conjugate.

Alamouti encoded signal is transmitted from the two transmit antennas over two symbol periods. During the first symbol period, two symbols x1 and x2 are simultaneously transmitted from the two transmit antennas. During the second symbol period, these symbols are transmitted again, where $-x_2^*$ is transmitted from the first transmit antenna and $x_1^*$ transmitted from the second transmit antenna.

To estimate the maximal likelihood signal detection for Alamouti space-time coding scheme, assumption is made that two channel gains, h1(t) and h2(t), are time invariant over two consecutive symbol periods, that is:

and

$$h_1(t) = h_1(t + T_s) = h_1 = |h_1| e^{j\theta_1}$$

$$h_2(t) = h_2(t+T_s) = h_2 = |h_2|e^{j\theta_2}$$

where $|h_i|$ and $\ominus i$ denote the amplitude gain and phase rotation over the two symbol periods, $i=1, 2$. Let y1 and y2 denote the received signals at time t and t+Ts, respectively, then:

$$y_1 = h_1 x_1 + h_2 x_2 + z_1$$

$$y_2 = -h_1 x_2^* + h_2 x_1^* + z_2$$

where z1 and z2 are the additive noise at time t and t+Ts, respectively. Taking complex conjugation of the second received signal, the following matrix vector equation comes:

$$\begin{bmatrix} y_1 \\ y_2^* \end{bmatrix} = \begin{bmatrix} h_1 & h_2 \\ h_2^* & -h_1^* \end{bmatrix} \begin{bmatrix} x_1 \\ x_2 \end{bmatrix} + \begin{bmatrix} z_1 \\ z_2^* \end{bmatrix}$$

In the course of time, from time t to t+T$_s$, the estimates for channels gains,^h1 and ^h2, are provided by the channel estimator, since those channels gains are not exactly known in advance. To make the reasoning simpler, and since this aspect impacts embodiments of the invention as well as prior art in a similar way, an assumption is however hereby made which corresponds to an ideal situation in which the channel gains, h1 and h2, are exactly known to the receiver. Then the transmit symbols are now two unknown variables in the matrix of the above equation. Multiplying both sides of the above equation by the Hermitian transpose of the channel matrix, gives:

$$\begin{bmatrix} h_1^* & h_2 \\ h_2^* & -h_1 \end{bmatrix} \begin{bmatrix} y_1 \\ y_2^* \end{bmatrix} = \begin{bmatrix} h_1^* & h_2 \\ h_2^* & -h_1 \end{bmatrix} \begin{bmatrix} h_1 & h_2 \\ h_2^* & -h_1^* \end{bmatrix} \begin{bmatrix} x_1 \\ x_2 \end{bmatrix} + \begin{bmatrix} h_1^* & h_2 \\ h_2^* & -h_1 \end{bmatrix} \begin{bmatrix} z_1 \\ z_1^* \end{bmatrix}$$

$$= \left( |h_1|^2 + |h_2|^2 \right) \begin{bmatrix} x_1 \\ x_2 \end{bmatrix} + \begin{bmatrix} h_1^* z_1 + h_2 z_1^* \\ h_2^* z_1 - h_1 z_1^* \end{bmatrix}$$

The above equation means that by estimating the channel to find h1 and h2, the transmitted signals x1 and x2 can be detected. This is an interesting feature of the Space Time Block Code. Space Time Block Code is indeed interesting because it leads to much better receiver performance in terms of Bit Error Rate versus Signal to Noise Ratio.
It is to be noted that in Alamouti coding technique, the two antennas transmit according to the following matrix:

$$M1 = \overset{\text{symbol} \longrightarrow}{\text{antenna} \downarrow} \begin{bmatrix} x_1 & -x_2^* \\ x_2 & x_1^* \end{bmatrix}$$

A particularly interesting feature of the Space Time Block Code of the Alamouti type resides in the fact that the two antennas are sending two consecutive symbols that are preferably orthogonal. This orthogonality is proved by the zero complex dot product of the vectors forming the columns of the matrix M1. These two vectors are: $[x_1, x_2]$ and $[-x_2^*, x_1^*]$. The complex dot product is: $[x_1, x_2].[-x_2^*, x_1^*] = x1.( -x_2^*)^* + x_2.(x_1^*)^* = 0$.

The same orthogonality can be proven for the following matrices that correspond to Alamouti codes too, and to orthogonal Alamouti codes. Each matrix can be obtained from the next one simply by changing the sense of its orthogonality, that is to say by making the sign minus circulate in the four possible positions where it can be located in a matrix 2 by 2.

We then get:

$$M2 = \begin{bmatrix} -x_1 & x_2^* \\ x_2 & x_1^* \end{bmatrix},$$

$$M3 = \begin{bmatrix} x_1 & x_2^* \\ -x_2 & x_1^* \end{bmatrix},$$

and

$$M4 = \begin{bmatrix} x_1 & x_2^* \\ x_2 & -x_1^* \end{bmatrix}$$

We can say that M1, M2, M3, and M4 are all orthogonal, but with different orthogonality senses. All 2 by 2 four matrixes M1, M2, M3, and M4 are orthogonal Space Time Block Codes, respectively with four different senses of orthogonality.

Fig. 1 shows an example of steps of a method of communication, at transmitting side, according to an embodiment of the invention. The method of communication successively comprises a step S1 of identifying the data format, a step S2 of encoding the packet header, a step S3 of transmitting the data.

In the step S1 of identifying the data format, at transmitting side, the data format to be encoded is identified either actively or passively. Information related to this data format can be given with the data themselves. The transmitter can have means to detect the data format of the data it gets, before putting them into a packet.

In the step S2 of encoding the packet header, at transmitting side, an encoding, with one or more orthogonal space time block codes chosen among a predetermined group of orthogonal space time block codes, of one or more series of several consecutive symbols in a header of a packet of data of a same data format is performed, said orthogonal space time block code or said succession of orthogonal space time block codes being chosen so as to be representative of said data format. These consecutive symbols themselves vehicle information different from said data format: the have their own function within the data packet header. Since said data packet presents a predetermined segmented structure, it would not have been easy to simply add another segment in the packet header related to data format information. Therefore, these consecutive symbols, besides fulfilling their own function within packet header, also fulfill another function of transporting information related to data format thanks to this embodiment of the invention. This information related to data format preferably contains two pieces of information, one piece of information related to the data frame format and one piece of information related to the channel bandwidth. Indeed, since the standard of communication has different configurations of channel bandwidths, and even has different configurations of channel bandwidths for a given frame format, the channel bandwidth becomes an important parameter to know at receiving side, before being able to receive correctly the sent data and to extract them from the received packet.

Preferably, all these orthogonal space time block codes are each represented by a 2 by 2 matrix, all these orthogonal space time block codes are preferably Alamouti codes, and this predetermined group preferably comprises 4 different space time block codes. The only difference between all these orthogonal Alamouti space time block codes of said predetermined group is the sense of their orthogonality: it is the variation of this sense of orthogonality all along the used succession of orthogonal Alamouti space time block codes which will correspond to the data format looked for. More detail about this step S2 of encoding will be given in relation to figure 6.

In the step S3 of transmitting the data, the data format being encoded in the packet header, and the data being then encapsulated in the packet, the whole packet, including header and data is transmitted over the communication link, from transmitter to receiver.

Fig. 2 shows an example of steps of a method of communication, at receiving side, according to an embodiment of the invention. The method of communication successively comprises a step S4 of analyzing the packet header, a step S5 of identifying the Space Time Block Code, a step S6 of associating the data format, a step S7 of adapting the data receiving parameter, a step S8 of receiving the data.

In the step S4 of analyzing the packet header, at receiving side, one or more series of several consecutive symbols in a header of a packet of data of a same data format are analyzed. Those series of several consecutive symbols had been previously encoded with one or more space time block codes chosen among a predetermined group of space time block codes in such a way that said space time block code or said succession of space time block codes is representative of said data format.

In the step S5 of identifying the Space Time Block Code, at receiving side, the reverse analysis of which space time block code or which succession of space time block codes has been used to encode these series of several consecutive symbols gives the space time block code or the succession of space time block codes looked for.

In the step S6 of associating the data format, at receiving side, the found space time block code or the found succession of space time block codes can be directly matched with the corresponding data format.

In the step S7 of adapting the data receiving parameter, at receiving side, thanks to the found data format, which means both frame format and channel bandwidth, a data receiving parameter of the received can be tuned so that it becomes adapted to the detected frame format as well as to the detected channel bandwidth which may for example imply looking for data in several parallel channels of the communication link.

In the step S8 of receiving the data, at receiving side, the receiver being completely adapted for receiving a data packet of a given frame format and of a given channel bandwidth, data can be transmitted and received, while the risk of missing part of transmitted data has been minimized.

Fig. 3 shows an example of a part of a transmitter according to an embodiment of the invention. The transmitter comprises an input 1, an Alamouti encoder 2, two transmitting antennas 3 and 4, with their respective emissions 5 and 6. The incoming succession of consecutive symbols to be encoded in the packet header arrives on the input 1. This succession of consecutive symbols is encoded in a header of a packet of data of a same data format, in Alamouti encoder 2, with one or more orthogonal Alamouti codes chosen among a predetermined group of orthogonal Alamouti codes. After being encoded, this succession of consecutive symbols is distributed to the two transmitting antennas 3 and 4, respectively according to their encoding, and then respectively emitted in the air as two series 5 and 6.

Fig. 4 shows an example of a part of a receiver according to an embodiment of the invention. This receiver comprises at least one receiving antenna 7, there may be several of them to improve reception quality, a decoder 8 and an output 9. The former series of encoded consecutive symbols 5 and 6 are first received by receiving antenna 7. They are then decoded in decoder 8 which identifies the orthogonal Alamouti code or the succession of orthogonal Alamouti codes by analyzing these series of encoded consecutive symbols 5 and 6 after having extracted them from the packet header. Once identified, this orthogonal Alamouti code or this succession of orthogonal Alamouti codes, being representative of said data format, allows for this data format to be associated to them. Afterwards, the receiver adapts at least one of its data receiving parameters to said associated data format, to make sure that data will be then correctly received, their frame format and their channel bandwidth being duly taken into account.

Fig. 5 shows an example of encoding of some examples of data format within a method of communication, at transmitting side, according to the prior art. Only frame format can be detected, using the encoding of consecutive symbols in the packet header, not channel bandwidth which will need other supplementary operations to be performed. The communication is performed according to standard IEEE 802.11.

There are 4 possible different frame formats to be encoded. These frame formats 10, 20, 30, 40 respectively are NON-HT, HT-MF, HT-GF, VHT. Each of these frame formats may comprise one or more of following segments 51, 52, 53, 54, 55, 56, 57, 58, 59, 60, respectively for L-STF, L-LTF, L-SIG, HT-SIG, HT-STF, HT-LTF, WHTSIG, VHTSTF, VHTLTF, DATA. Only segment 60 contains data to be transmitted, all other segments 51 to 59 corresponding to segments of the packet header.

Thanks to encoding 61, through BPSK, corresponding to the horizontal points, and through QBPSK, corresponding to the two vertical points, the frame format is encoded in the consecutive symbols themselves, all consecutive symbols being encoded with the same space time block code which can be an Alamouti code. Because of the binary value of this encoding 61, either BPSK or QBPSK, the data format information quantity that can be encoded remains rather limited. Besides, this type of encoding 61 compels to go deeper into the signal analysis, by analyzing the consecutive symbols themselves and not only the way they are coded as in the embodiment of the invention which will now be described in relation to figure 6.

Fig. 6 shows an example of encoding of some examples of data format within a method of communication, at transmitting side, according to an embodiment of the invention. The considered communication is wireless, and is preferably according to WIFI protocol. In the example now described, the considered communication is performed according to standard IEEE 802.11, and more precisely according to standard IEEE 802.11 ac, the encoded consecutive symbols being located in SIG type segments of said header. Now, not only frame format can be detected, using the encoding of consecutive symbols in the packet header, but simultaneously also channel bandwidth.

In the receiver, the Mode Detector module provides indication of the mode, that is to say the frame format, of the received packet (which is the PPDU format, the Physical layer convergence procedure Protocol Data Unit), and the corresponding bandwidth allocation, which can vary from 20 MHz to 160 MHz. This data frame format and channel bandwidth information is useful to the receiver to configure the rest of the processing blocks and select the set of subcarriers used in the PPDU reception. This information has to be obtained in the Mode Detector module at the latest by the end of the SIG field of the packet header, because next to it already come the data segments.

In a VHT network, the transmitter can generate frames with NON-HT, HT or VHT format. The receiver shall be able to dynamically detect the frame type and configure the demodulator accordingly. For example, when the Basic Service Set is configured for 40MHz or 80MHz channel bandwidth, the transmitter can start the transmission on the 20MHz primary channel only, or it can use a 40MHz or 80MHz channel bandwidth. The receiver shall be able to dynamically, that is to say online, detect the occupied channel bandwidth and configure the demodulation accordingly.

There are indeed 11 possible different data formats, consisting of combinations of frame formats and of channel bandwidths, to be encoded. These frame formats 11, 12, 13, 21, 22, 31, 32, 41, 42, 43, 44 respectively are NON-HT 20MHz, NON-HT-DUP-OFDM 40MHz, NON-HT-DUP-OFDM 80MHz, HT-GF 20 MHz, HT-GF 40 MHz, HT-MF 20 MHz, HT-MF 40 MHz, VHT 20MHz, VHT 40MHz, VHT 80MHz, VHT 160MHz.

Each of these frame formats may comprise one or more of following segments 51, 52, 53, 54, 55, 56, 57, 58, 59, 60, respectively for L-STF, L-LTF, L-SIG, HT-SIG, HT-STF, HT-LTF, WHTSIG, VHTSTF, VHTLTF, DATA. Only segment 60 contains data to be transmitted, all other segments 51 to 59 corresponding to segments of the packet header.

Thanks to encoding 62, corresponding to encoding at least part of the SIG types segments, for example 53, 54, 57, by a different succession of orthogonal Alamouti codes, the whole data format, meaning the combination of both the frame format, NON-HT, HT-GF, HT-MF or VHT, and the channel bandwidth, 20 MHz, 40 MHz, 80 MHz, 160 MHz, can be encoded in the packet header.

Because of the four possible values of this encoding 62, which are the matrices M1, M2, M3 and M4 previously presented, the data format information quantity that can be encoded becomes now rather important. Besides, this type of encoding 62, only needs to find back the used Alamouti code or the used succession of Alamouti codes, in order to get back the data format information, without needing an analysis of the consecutive symbols themselves as in prior art. Only the codes used to code the consecutive symbols have to be identified.

More precisely, the correspondence between used succession of Alamouti codes chosen among the Alamouti orthogonal codes represented by matrices M1, M2, M3 and M4 previously presented, and the type of data format, corresponding to the combination of a data frame format and a channel bandwidth, is done as follows.

If M1 is detected at the end of t1, after analysis of segment 53, then the data format 11 is identified, which is NON_HT 20 MHz. If M2 is detected at the end of t1, after analysis of segment 53, then the data format 12 is identified, which is NON_HT_DUP_OFDM 40MHz. If M3 is detected at the end of t1, after analysis of segment 53, then the data format 13 is identified, which is NON_HT_DUP_OFDM 80MHz.

If M4 is detected at the end of t1, after analysis of segment 53, then the data format cannot yet be identified. It can simply be deduced that it is either of the type HT-MF, or of the type HT-GF, or of the type VHT mode. Then a second header segment 54 or 57 has to be analyzed.

If M1 is detected at the end of t2, after analysis of segment 54, then the data format 21 is identified, which is HT-GF 20 MHz. If M2 is detected at the end of t2, after analysis of segment 54, then the data format 22 is identified, which is HT-GF 40 MHz.

If M3 is detected at the end of t2, after analysis of segment 54, then the data format cannot yet be identified. It can simply be deduced that it is of the type HT-MF mode, but the channel bandwidth cannot yet be identified. Then a third header segment 54 has to be analyzed. If M1 is detected after analysis of next segment 54, then the data format 31 is identified, which is HT-MF 20 MHz. If M2 is detected after analysis of next segment 54, then the data format 32 is identified, which is HT-MF 40 MHz.

If M4 is detected at the end of t2, after analysis of segment 57, then the data format 11 cannot yet be identified. It can simply be deduced that it is of the type VHT mode, but the channel bandwidth cannot yet be identified. Then a third header segment 57 has to be analyzed. If M1 is detected at the end of t3, after analysis of next segment 57, then the data format 41 is identified, which is VHT 20 MHz. If M2 is detected at the end of t3, after analysis of next segment 57, then the data format 42 is identified, which is VHT 40 MHz. If M3 is detected at the end of t3, after analysis of next segment 57, then the data format 43 is identified, which is VHT 80 MHz. If M4 is detected at the end of t3, after analysis of next segment 57, then the data format 41 is identified, which is VHT 160 MHz.

As a supplementary option, the method of communication according to an embodiment of the invention may comprise, at transmitting side, encoding, with one or more orthogonal space time block codes chosen among a predetermined group of orthogonal space time block codes, one or more series of several other consecutive symbols in said header of said packet, said orthogonal space time block code or said succession of orthogonal space time block codes being chosen so as to be representative of a time synchronization parameter of said packet. This time synchronization encoding could be performed for example by encoding series of consecutive symbols, in the segments 51 or 52 of the packet header, with one or more of those matrices M1, M2, M3 and M4 previously presented.

The invention has been described with reference to preferred embodiments. However, many variations are possible within the scope of the invention.

**Claims**

1. Method of communication comprising, at transmitting side, encoding (S2), with one or more space time block codes chosen among a predetermined group of space time block codes (M1, M2, M3, M4), one or more series of several consecutive symbols (x1, x2) in a header of a packet of data of a same data format (11 to 44), said space time block code or said succession of space time block codes being chosen so as to be representative of said data format (11 to 44).

2. Method of communication comprising, at receiving side:

   - identifying a space time block code or a succession of space time block codes (M1, M2, M3, M4) by analyzing one or more series of several consecutive symbols (x1, x2) in a header of a packet of data of a same data format (11 to 44), previously encoded with one or more space time block codes chosen among a predetermined group of space time block codes (M1, M2, M3, M4) in such a way that said space time block code or said succession of space time block codes is representative of said data format (11 to 44),
   - associating said data format (11 to 44) to said identified space time block code or said identified succession of space time block codes (M1, M2, M3, M4),
   - adapting at least one of the data receiving parameters to said associated data format (11 to 44).

3. Method of communication according to any of preceding claims, wherein all space time block codes belonging to said predetermined group of space time block codes (M1, M2, M3, M4) are orthogonal or quasi-orthogonal space time block codes, and preferably are orthogonal space time block codes.

4. Method of communication according to any of preceding claims, wherein the only difference between all orthogonal space time block codes (M1, M2, M3, M4) of said predetermined group is the sense of their orthogonality.

5. Method of communication according to any of preceding claims, wherein said consecutive symbols (x1, x2) themselves vehicle an information different from said data format (11 to 44).

6. Method of communication according to any of preceding claims, wherein said data format (11 to 44) contains two pieces of information, one piece of information related to the data frame format and one piece of information related to the channel bandwidth.

7. Method of communication according to any of preceding claims, wherein communication between transmitting side and receiving side is performed via a multichannel connection, one or part of or all of the different channels of the multichannel connection being usable.

8. Method of communication according to any of preceding claims, wherein said data packet presents a predetermined segmented structure.

9. Method of communication according to any of preceding claims, wherein all said space time block codes (M1, M2, M3, M4) are each represented by a 2 by 2 matrix, wherein all said space time block codes are preferably Alamouti codes, and wherein said predetermined group preferably comprises 4 different space time block codes (M1, M2, M3, M4).

10. Method of communication according to any of preceding claims, wherein said communication is wireless, and is preferably according to WIFI protocol.

11. Method of communication according to claim 10, wherein said communication is performed according to standard IEEE 802.11, preferably IEEE 802.11 ac, and wherein said encoded consecutive symbols are located in SIG type segments of said header.

12. Method of communication according to any of preceding claims, wherein it comprises, at transmitting side, encoding, with one or more space time block codes chosen among a predetermined group of space time block codes (M1, M2, M3, M4), one or more series of several other consecutive symbols ($x1$, $x2$) in said header of said packet, said space time block code or said succession of space time block codes being chosen so as to be representative of a time synchronization parameter of said packet, all space time block codes being preferably orthogonal space time block codes.

13. A computer program product comprising a computer readable medium, having thereon a computer program comprising program instructions, the computer program being loadable into a data-processing unit and adapted to cause execution of the method according to any of preceding claims when the computer program is run by the data-processing unit.

14. A transmitter comprising:

   - at least two transmitting antennas (3, 4),
   - one encoder (2) adapted to encode, with one or more space time block codes chosen among a predetermined group of space time block codes (M1, M2, M3, M4), one or more series of several consecutive symbols ($x1$, $x2$) in a header of a packet of data of a same data format (11 to 44), said space time block code or said succession of space time block codes being chosen so as to be representative of said data format (11 to 44).

15. A receiver comprising:

   - at least a receiving antenna (7),
   - a decoder (8) adapted to:

      ○ identify a space time block code or a succession of space time block codes by analyzing one or more series of several consecutive symbols ($x1$, $x2$) in a header of a packet of data of a same data format (11 to 44), previously encoded with one or more space time block codes chosen among a predetermined group of space time block codes (M1, M2, M3, M4), in such a way that said space time block code or said succession of space time block codes is representative of said data format (11 to 44),
      ○ associate said data format (11 to 44) to said identified space time block code or said identified succession of space time block codes,
      ○ adapt at least one of its data receiving parameters to said associated data format (11 to 44).

Fig.1

| IDENTIFYING DATA FORMAT | S1 |
| ENCODING PACKET HEADER | S2 |
| TRANSMITTING DATA | S3 |

Fig.2

| ANALYZING PACKET HEADER | S4 |
| INDENTIFYING STBC | S5 |
| ASSOCIATING DATA FORMAT | S6 |
| ADAPTING DATA RECEIVING PARAMETER | S7 |
| RECEIVING DATA | S8 |

Fig.3

$\cdots X_4 \quad X_3 \quad X_2 \quad X_1$
$\quad 4T \quad 3T \quad 2T \quad t = T$

1

2 Alamouti encoder

3

5 $\cdots -X_4^* \quad X_3 \quad -X_2^* \quad X_1$
$\quad 4T \quad 3T \quad 2T \quad t = T$

4

6 $\cdots X_3^* \quad X_4 \quad X_1^* \quad X_2$
$\quad 4T \quad 3T \quad 2T \quad t = T$

Fig.4

5

7

6

8 DECODER

9

Fig.5

# Fig.6

Europäisches
Patentamt

European
Patent Office

Office européen
des brevets

## EUROPEAN SEARCH REPORT

Application Number

EP 13 30 5103

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VINCENT CHOQUEUSE ET AL: "Blind recognition of linear space time block codes", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 2833-2836, XP031251181, ISBN: 978-1-4244-1483-3 * sections 4-6 * ----- | 1-15 | INV. H04L1/00 H04L1/06 |
| A | JAVIER VIA ET AL: "On the Blind Identifiability of Orthogonal Space-Time Block Codes From Second-Order Statistics", IEEE TRANSACTIONS ON INFORMATION THEORY, IEEE PRESS, USA, vol. 54, no. 2, 1 February 2008 (2008-02-01), pages 709-722, XP011200601, ISSN: 0018-9448, DOI: 10.1109/TIT.2007.913561 * the whole document * ----- | 1-15 | |

TECHNICAL FIELDS
SEARCHED      (IPC)

H04L

The present search report has been drawn up for all claims

| Place of search | Date of completion of the search | Examiner |
|---|---|---|
| The Hague | 5 July 2013 | Borges, Pedro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 2 760 150 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAROKH, V. ; JAFARKHANI, H. ; CALDERBANK, A.R.** Space-time block coding for wireless communications: performance results. *IEEE Journal on selected areas in communications,* March 1999, vol. 17 (3), 451-460

- **S.M. ALAMOUTI.** A simple transmitter diversity scheme for wireless communications. *IEEE Journal on selected areas in communications,* October 1998, vol. 16, 1451-1458